# EUROPÄISCHE PATENTANMELDUNG

(11) **EP 3 528 005 A1**
(43) Veröffentlichungstag der Anmeldung: **21.08.2019**
(21) Anmeldenummer: 18157644.8
(22) Anmeldetag: 20.02.2018
(51) Int. Cl.: G01S 7/497, G01S 7/491, G01S 13/32, H01L 27/146, H04N 5/33

(54) **TOF-KAMERAVORRICHTUNG ZUR FEHLERERKENNUNG**

(71) Anmelder: Espros Photonics AG, 7320 Sargans (CH)
(72) Erfinder: De Coi, Beat, 7304 Maienfeld (CH)
(74) Vertreter: Otten, Roth, Dobler & Partner mbB Patentanwälte

(57) **Zusammenfassung**

Vorgeschlagen wird eine TOF-Kameravorrichtung (K) zur Aussendung von Lichtsignalen und Aufnahme des an einem Objekt (8) rückgestreuten Lichts (7') sowie zur Bestimmung der Entfernung der TOF-Kameravorrichtung (K) vom Objekt (8), wobei die TOF-Kameravorrichtung umfasst:
• einen Sender (5) zur Aussendung von Lichtsignalen,
• einen Empfänger (2) zur Detektion des am Objekt (8) rückgestreuten Lichts (7'), der als Pixelmatrix mit wenigstens einem Pixel (P) ausgebildet ist,
• eine Modulationseinrichtung (1) zur Erzeugung eines Modulationssignals, um vom Sender (5) auszusendende Lichtsignale zu modulieren,
• eine Auswerteeinrichtung (2') zur Auswertung des vom Empfänger (2) detektieren Lichts, welche mit der Modulationseinrichtung (1) verbunden ist, um das Modulationssignal zur Auswertung und Bestimmung der Entfernung zu erhalten.

Um eine besonders sichere Fehlererkennung zu ermöglichen, ist eine Kontrollvorrichtung (6) zur Fehlererkennung bei wenigstens einem der Pixel vorgesehen.

## Beschreibung

Die Erfindung betrifft eine TOF-Kameravorrichtung nach dem Oberbegriff des Anspruchs 1 sowie ein Verfahren zur Fehlererkennung bei wenigstens einem Pixel nach dem Oberbegriff des Anspruchs 12.

Optische Überwachungssysteme wie TOF-Kameravorrichtungen werden im Stand der Technik für zahlreiche sicherheitsrelevante Anwendungen eingesetzt, zum Beispiel bei Tür- bzw. Torüberwachungen, insbesondere bei motorisch angetriebenen bzw. automatisch sich öffnenden oder schließenden Tür- oder Torsystemen wie automatisch betriebene Eingangstüren, Garagentore, Aufzugtüren, oder dergleichen, bis hin zu Fahrassistenzsystemen bei Fahrzeugen oder Robotern oder sonstigen Steuerungssystemen für autonomes Fahren. Gerade in diesen Bereichen ist ein fehlerfreies Funktionieren entsprechender TOF-Kameravorrichtung von großer Bedeutung, um Unfälle, Verletzungen von Personen oder die Beschädigung von Gegenständen vermeiden zu können. Aus dem Stand der Technik ist beispielsweise aus der EP 2 453 426 B1 eine Überwachungsvorrichtung mit einem TOF-Sensor bekannt, der bei der Initialisierung sich selbst testet und gegebenenfalls eine Plausibilitätsprüfung durchführt, um Fehler vermeiden zu können.

Aufgabe der Erfindung ist es, eine TOF-Kameravorrichtung bereitstellen zu können, die gerade im Zusammenhang mit sicherheitsrelevanten Anwendungen auch ein möglichst hohes Maß an Sicherheit bieten kann.

Die Aufgabe wird, ausgehend von einer TOF-Kameravorrichtung bzw. einen Fehlererkennungsverfahren der eingangs genannten Art, durch die kennzeichnenden Merkmale der Ansprüche 1 bzw. 12 gelöst.

Durch die in den abhängigen Ansprüchen genannten Maßnahmen sind vorteilhafte Ausführungen und Weiterbildung der Erfindung möglich.

Die TOF-Kameravorrichtung im Sinne der Erfindung dient zur Aussendung von Lichtsignalen und Aufnahme des an einem Objekt rückgestreuten Lichts sowie zur Bestimmung der Entfernung der TOF-Kameravorrichtung vom Objekt. Die Abkürzung "TOF" steht für den englischen Begriff "Time-of-flight", d.h. es handelt sich um eine Form der Laufzeitmessung. Eine entsprechende TOF-Kameravorrichtung umfasst einen Sender, mit welchem die Lichtsignale ausgesandt werden, sowie einen Empfänger, mit dem das an einem Objekt rückgestreute Licht detektiert wird. Auf diese Weise kann die Distanz zwischen der Kameravorrichtung und Objekt bestimmt werden, in dem eine Art Laufzeitmessung vorgenommen wird. Eine derartige Laufzeitmessung kann zum Beispiel durch Bestimmung einer Phasenverschiebung zwischen einem ausgesandten und einem detektieren Signal erfolgen. Es kann auch stattdessen eine Zeitmessung an einem ausgesandten Puls vorgenommen werden (z. B. bei pTOF oder LIDAR). Zu diesem Zweck umfasst eine entsprechende TOF-Kameravorrichtung eine Modulationseinrichtung zur Erzeugung eines Modulationssignals. Die Modulationseinrichtung ist wiederum mit dem Sender verbunden und moduliert das auszusendende Lichtsignal. Beispielsweise ist das aufmodulierte Modulationssignal im Vergleich zur Lichtfrequenz (hier wird in der Regel Infrarotlicht verwandt) niederfrequent, um die Messung einer Phasenverschiebung zu erleichtern bzw. überhaupt möglich zu machen. Die Bestimmung der Phasendifferenz kann etwa über eine Korrelation vorgenommen werden.

Zur Auswertung des vom Empfänger detektierten Lichts ist eine Auswerteeinrichtung vorgesehen, welche mit der Modulationseinrichtung verbunden ist, um das Modulationssignal zur Auswertung und Bestimmung der Entfernung dort abzugreifen.

Die TOF-Kameravorrichtung kann grundsätzlich die gesamte Kamera umfassen. Sie kann aber auch lediglich die zuvor erwähnten Bauteile wie Sender, Empfänger, Modulationseinrichtung und Auswerteeinrichtung umfassen, welche gegebenenfalls auch in einem einzelnen Chip implementiert und zusammengefasst sein können.

Die TOF-Kameravorrichtung gemäß der Erfindung umfasst eine Pixelmatrix, welche in der Regel eine Anordnung aus wenigstens zwei Pixeln aufweist. In einem Spezialfall kann die Pixelmatrix aber auch nur ein einziges Pixel aufweisen, z.B. wenn lediglich Licht empfangen werden soll, ohne dass es auf eine Auflösung eines Bildes ankommt.

In vorteilhafter Weise zeichnet sich die erfindungsgemäße TOF-Kameravorrichtung dadurch aus, dass eine Kontrollvorrichtung zur Fehlererkennung bei wenigstens einem der Pixel vorgesehen ist. Die Überprüfung geht also darüber hinaus, einen allgemeinen Test durchzuführen, ob die Elektronik grundsätzlich funktionsbereit ist, ob überhaupt Signale empfangen werden können oder ob die optischen Komponenten etwa im für die Überwachung passenden Wellenlängenbereich (z.B. im Infrarot-Bereich) detektieren. Vielmehr können einzelne Pixel oder Pixelgruppen dahingehend überprüft werden, ob diese einen verlässlichen Empfang ermöglichen oder nicht. Durch diese Maßnahme können insbesondere Fehler entdeckt werden, die mit herkömmlichen Testverfahren nicht oder nur sehr schwer bemerkt werden können. Darüber hinaus kann beim Testen auf verschiedene typische Fehler abgestellt werden, etwa Fehlfunktionen beim dynamischen Erkennen von Objekten, die sonst verborgen blieben, aber in besonderem Maße sicherheitsrelevant sind.

Vor allem folgende Fehlertypen können grundsätzlich auftreten, welche im Zusammenhang mit einer dynamischen Erkennung, gerade bei Fahrzeugen aller Art, ein hohes Risiko für die Sicherheit darstellen können:
- Es kommt immer wieder vor, dass einzelne Pixel oder Pixelgruppen "hängen", d.h. trotz Veränderung innerhalb ihres Detektionsbereichs (z.B. Erscheinen oder Verschwinden von Objekte, Änderungen bei den Positionen) liefern diese Pixel einen gleichbleibenden Ausgangswert bzw. einen gleichbleibenden Ausgangsvektor an Signalen. Ein solcher Fehler kann dazu führen, dass zumindest Teile des überwachten Bereichs dauerhaft oder für eine gewisse Zeitspanne überhaupt nicht überwacht werden können. Gerade im Zusammenhang mit Fahrzeugen sind somit auch Kollisionen möglich.
- Ferner können sich bei einzelnen Pixeln oder Pixelgruppen Fehler im Zusammenhang mit der Distanzauflösung ergeben. Betrachtet man den Ausgang solcher Pixel, so lässt sich ein "Springen" feststellen, d.h. die Distanzwerte ändern sich nicht kontinuierlich oder in kleinen Schritten, die angepasst sind an die zu erwartende Auflösung, sondern sie ändern sich in größeren Schritten, wodurch beispielsweise das Risiko entsteht, dass ein sich näherndes Objekt nicht mehr rechtzeitig erkannt werden kann.
- Probleme im Zusammenhang mit der Überwachung eines Bereichs können auch dann entstehen, wenn einzelne Pixel gerade kein Objekt im Überwachungsbereich feststellen können und deshalb unklar ist, ob diese Pixel fehlerhaft arbeiten und deshalb ein Objekt nicht erkennen oder ob diese Pixel korrekt arbeiten und sich tatsächlich im entsprechenden Überwachungsbereich gerade kein Objekt befindet.
- Darüber hinaus können Fehler im Zusammenhang mit einer Adressierung auftreten. Beispielsweise ist es denkbar, dass einige Zeilen in einer Pixelmatrix mehrfach ausgelesen werden, andere dafür jedoch nicht. Ein solcher Fehler verringert grundsätzlich die Auflösung, kleinere Objekte können gegebenenfalls nicht mehr detektiert werden.

Zur Erkennung derartiger Fehler ist es in der Regel unzureichend, zu überprüfen, ob eine generelle Signalübertragung innerhalb der Elektronik stattfindet bzw. ob grundsätzlich vom Empfänger eine optische Detektion möglich ist oder nicht. Die Erfindung schlägt daher eine verbesserte, gründlichere Fehlererkennung vor, mit der einzelne Pixel oder Pixelgruppen diesbezüglich näher untersucht werden müssen.

Bei einer vorteilhaften Weiterbildung der Erfindung umfasst die Kontrollvorrichtung eine Testvorrichtung zur Ausführung eines Testvorgangs und verwendet in diesem Zusammenhang eine kontrollierbare Verzögerungsleitung. Die Testvorrichtung kontrolliert entsprechend die Verzögerungsleitung, um das Modulationssignal zeitverzögert an einen Sender bzw. an die Auswerteeinrichtung weiterzuleiten. Auf diese Weise kann die Kontrollvorrichtung mittels der Testvorrichtung eine Distanzsimulation für wenigstens eines bis hin zu jedem der Pixel durchführen, um zu kontrollieren, welche Distanzwert durch das entsprechende Pixel bestimmt wird.

Tritt zum Beispiel der Fehler auf, dass ein Pixel "hängt", so wird bei einer derartigen Abfrage festgestellt werden können, ob das Pixel auch unterschiedliche Distanzwerte liefern kann oder nicht. Wird bei der Übertragung des Modulationssignals an den Sender oder an die Auswerteeinrichtung eine Verzögerungsleitung zwischengeschaltet, so beeinflusst diese Verzögerungsleitung das Ergebnis, wie stark zeitversetzt die Signale jeweils bei der Auswerteeinrichtung ankommen. Auf diese Art und Weise kann grundsätzlich nicht nur eine Kalibrierung der TOF-Kameravorrichtung vorgenommen werden, weil durch die zwischengeschaltete Verzögerungsleitung der bestimmte Distanzwert ebenfalls verändert wird, sondern es kann in Bezug auf einzelne Pixel simuliert werden, dass sich die Entfernung detektierter Objekte verändert bzw. dass sich in einer vorgegebenen Entfernung ein Objekt befindet.

Die Kontrollvorrichtung und/oder die Testvorrichtung kann bzw. können in die TOF-Kameravorrichtung integriert sein oder ein separates Modul ausbilden und beispielsweise über eine Schnittstelle mit der TOF-Kameravorrichtung verbunden werden. Die Verzögerungsleitungen können grundsätzlich ein Teil der Kontroll- und/oder Testvorrichtung sein. Bei einer bevorzugten Weiterbildung der Erfindung sind die Verzögerungsleitungen in die TOF-Kameravorrichtung oder in den Kamerachip integriert, sodass das Modulationssignal, welches über die Verzögerungsleitungen zeitverzögert wird, nicht umgeleitet und aus dem eigentlichen Kameramodul herausgeführt werden muss. Im Übrigen kann die TOF-Kameravorrichtung auch an eine Kalibriervorrichtung gekoppelt werden oder eine solche enthalten, mit der durch Einstellung einer Verzögerungszeit des Modulationssignals über die Verzögerungsleitungen eine Distanz-Kalibrierung vorgenommen wird.

Zunächst kann die Verzögerungsleitung in die Übertragungsstrecke zwischen Modulationseinrichtung und Sender eingebaut werden. Von der Modulationseinrichtung wird das Modulationssignal sodann weiterhin ohne zusätzliche Verzögerungsleitung an die Auswerteeinrichtung geleitet. Das bedeutet, dass das über den Sender verschickte Signal nicht nur eine Verzögerung, bedingt durch die Laufzeit des Lichtsignals, erfährt, sondern bewusst durch die zwischengeschaltete Verzögerungsleitung verzögert wird, d.h. das Signal wird bereits verzögert, bevor es überhaupt am Sender ankommt. Je größer die Verzögerung durch die zwischengeschaltete Verzögerungsleitung ist, desto größer ist der Entfernungswert, der durch diese Methode letzten Endes bestimmt wird.

Umgekehrt kann auch die Verzögerungsleitung zwischen Modulationseinrichtung und Auswerteeinrichtung zwischengeschaltet sein. Dies wiederum hat zur Folge, dass sich der bestimmte Distanzwert verringert, weil die Auswerteeinrichtung annimmt, das Modulationssignal sei erst zu einem späteren Zeitpunkt erzeugt worden. Tatsächlich liegt in einem solchen Fall das Modulationssignal jedoch in der Regel früher am Sender an, als es der Auswerteeinrichtung zur Verfügung gestellt worden ist. Insbesondere ist es denkbar, dass entsprechende Verzögerungsleitungen im Zusammenhang mit einer Ausführungsform in beide Wege zwischengeschaltet werden, nämlich auf dem Weg des Modulationssignals zwischen Modulationseinrichtung und Sender und auf dem Weg zwischen Modulationseinrichtung und Auswerteeinrichtung bzw. Empfänger. Je nachdem, ob die Verzögerungsleitung vor den Eingang des Senders oder der Auswerteeinrichtung bzw. des Empfängers geschaltet ist, kann das Vorzeichen der Verzögerung geändert werden. Sind Verzögerungsleitungen nämlich sowohl vor den Sender als auch vor die Auswerteeinrichtung bzw. den Empfänger geschaltet, kann demzufolge der Gesamtbereich, über den Distanzwerte variiert werden können, erweitert werden.

Bei einer vorteilhaften Weiterbildung der Erfindung weist die Verzögerungsleitung wenigstens zwei in Serie geschaltete Teilverzögerungsleitungen auf sowie ferner eine Auswahleinheit, welche das Modulationssignal am Ausgang jeder der Teilverzögerungsleitungen abgreift, sodass die mit der Auswahleinheit verbundene Testvorrichtung zwischen verschiedenen zeitverzögerten Modulationssignalen auswählen kann. Auf diese Art und Weise können die verschiedenen Zeitverzögerungen und die verschiedenen Wegstrecken, welche das Modulationssignal durchlaufen muss, in einer vergleichsweise kompakten Bauform realisiert werden. Ferner ist das Umschalten zwischen verschiedenen Zeitverzögerungen durch einfache Schaltmethoden bzw. das unterschiedliche Abgreifen des Signals an unterschiedlichen Stellen möglich.

Bei einer vorteilhaften Ausführungsform der Erfindung können die Teilverzögerungsleitungen jeweils als digitale Puffer ausgebildet werden. Diese ermöglichen eine sehr definierte und präzise Verzögerung des entsprechenden Signals.

Bei einem Ausführungsbeispiel der Erfindung können die Teilverzögerungsleitungen jeweils als digitale Puffer ausgebildet sein, sodass definierte Verzögerungen über standardisierte Bauteile ermöglicht werden und den Fertigungsprozess erleichtern können.

Grundsätzlich kann die Testvorrichtung zur analogen oder digitalen Kontrolle der Verzögerungsleitung ausgebildet sein und so grundsätzlich an verschiedene Bauarten einer Kamera angepasst werden.

Es ist aber auch möglich, die Verzögerungsleitung so zu gestalten, dass die Verzögerungszeiten, die damit realisiert werden können, nicht auf (einige wenige) diskrete Werte beschränkt sind, sondern kontinuierlich verändert werden können.

Eine Verzögerung in einer Leitung kann dadurch erreicht werden, dass ein elektronisches Bauteil in die Leitung eingebaut wird, welches das Signal um eine vordefinierte Zeitspanne verzögert. Insbesondere können bei einer Ausführungsform der Erfindung die Verzögerungsleitung und oder die Teilverzögerungsleitungen auch variabel verändert werden. Dies kann beispielsweise dadurch erreicht werden, dass die Verzögerungsleitung wenigstens einen digitalen Zähler aufweist, der mit einer Taktfrequenz arbeitet und über den Takt gesteuert werden kann. Insbesondere können derartige Taktfrequenzen wenigstens 2 GHz betragen. Auf diese Weise kann eine sehr präzise Einstellung der Zeitverzögerung vorgenommen werden.

Die Kontroll- bzw. die Testvorrichtung führt sodann eine Distanzsimulation bzw. eine Variation des Distanzwertes für das bzw. die Pixel durch und liest auch den Ausgangswert aus, um zu kontrollieren, welche Distanzwerte durch das entsprechende Pixel bestimmt wurde. Im Ergebnis kann die Kontrollvorrichtung folglich vergleichen, ob der ausgegebene Distanzwert dem durch die Simulation vorgegebenen Distanzwert entspricht oder hinreichend entspricht und das entsprechende Pixel somit grundsätzlich in der Lage ist, Distanzwerte mit hinreichender Präzision zu messen.

Falls das Pixel "hängt", liefert es unabhängig vom simulierten Distanzwert einen konstanten Wert am Ausgang, sodass insbesondere nicht nur erkannt werden kann, dass ein Fehler vorliegt und das entsprechende Pixel fehlerhaft detektiert, sondern der Fehler kann insbesondere auch hinsichtlich seines Typs (z.B. Pixel hängt) bzw. seiner Ursache identifiziert werden. Gleiches gilt, wenn das entsprechende Pixel Ausgangsdistanzen liefert, welche unkontrollierte Sprünge aufweisen. In beiden Fällen kann das empfangene Signal bzw. das detektierte Signal zeitverzögert über die Verzögerungsleitung weitergegeben werden, d.h. der ermittelte Distanzwert wird verändert und in einer von der Kontrollvorrichtung vorgegebenen Weise variiert. Da durch die Kontrollvorrichtung vorgegeben ist, um welchen Betrag und/oder um welches Vorzeichen der Distanzwert variiert wird, ergibt sich hieraus auch, ob ein entsprechender Fehler vorliegt oder nicht.

Wenn ein Pixel kein Objekt detektiert oder es zumindest den Anschein hat, dass ein Pixel kein Objekt detektiert, das heißt praktisch gesehen eine Blickrichtung gegen unendlich vorliegt (kein Objekt im Sichtfeld), liefert das Pixel demzufolge auch keinen Distanzwert. Es kann dementsprechend zunächst auch kein Distanzwert über eine Verzögerungsleitung variiert werden. Um dennoch herauszufinden, ob tatsächlich kein Objekt im Sichtfeld vorliegt, muss eine Art virtuelles Objekt mit vorgegebener Distanz erzeugt bzw. simuliert werden. Zu diesem Zweck kann ein sogenanntes Fill-and-Spill-Verfahren eingesetzt und genutzt werden. Bei diesem Verfahren wird gezielt eine vorgegebene Ladungsmenge in ein oder mehrere Pixel induziert, in dem ein entsprechendes elektrisches Signal bzw. eine Steuerspannung angelegt wird. Am Pixel selbst kann zum Beispiel dieses Signal an den Storagegates, an denen üblicherweise die photoinduzierten Ladungsträger, aufgeteilt gemäß einer Modulationsfrequenz, oder grundsätzlich auch unmittelbar an den Floating-Diffusions, an denen die detektierte Ladungsträgermenge bestimmt wird, angelegt werden. Das Pixel unterscheidet dann nicht, ob die entsprechende Ladung photoinduziert ist, also durch empfangenes Licht hervorgerufen wurde, oder gezielt durch das zuvor erwähnte elektrische Signal hervorgerufen wurde. Sodann kann verglichen werden, ob der durch das angelegte elektrische Signal beim Fill-and-Spill-Verfahren erzeugte Distanzwert mit dem erwarteten Distanzwert übereinstimmt oder nicht.

Ferner ist es möglich, zusätzlich mithilfe einer Verzögerungsleitung diesen Distanzwert zu variieren, um die Fehlererkennungsmöglichkeiten noch weiter zu verbessern.

Durch die Verwendung einer Vorrichtung zum Anlegen einer Steuerspannung bzw. Stimulationsspannung bzw. durch die Verwendung des Fill-and-Spill-Verfahrens im Zusammenhang mit diesem Test kann somit vorteilhafterweise auch eine korrekte Funktionsweise von Pixeln überprüft werden, wenn die festgestellten Symptome (hier: kein Objekt bzw. Objekt in unendlicher Entfernung) keinen Schluss zulassen, ob tatsächlich ein Fehler vorliegt.

Grundsätzlich kann mit einem Fill-and-Spill-Verfahren im Allgemeinen auch das Signal-Rausch-Verhältnis verbessert werden, indem durch Anlegen des vorgegebenen elektrischen Signals die Storagegates auf ein bestimmtes Niveau gefüllt werden, sodass erst weitere photoinduzierte Ladungsträger aus dem Storagegate abfließen können und zur Messung beitragen.

Darüber hinaus kann bei einer Ausführungsvariante der Erfindung eine Adressiervorrichtung zur Adressierung der Pixel der Pixelmatrix vorgesehen sein, wobei die Kontrollvorrichtung eine Rückleseeinrichtung umfasst, um die Pixel auszulesen und deren ausgelesenen Inhalt zu kontrollieren. Auf diese Weise kann verglichen werden, ob tatsächlich die korrekten Pixel auch ausgelesen wurden, die mit der entsprechenden Adressierung angesprochen werden sollten, oder andere. Liegt ein Adressierungsfehler vor, besteht oftmals das Problem, dass einzelne Zeilen oder Spalten einer Pixelmatrix nicht angesteuert werden, während oftmals zusätzlich beispielsweise andere Zeilen oder Spalten stattdessen mehrfach angesteuert werden. Insgesamt wird somit die Auflösung der Kamera schlechter, und bestimmte Bereiche des Überwachungsbereichs bzw. des Sichtfeldes werden nicht mehr detektiert, weil die zugehörigen Pixel durch falsche Adressierung bzw. durch falsches Auslesen unberücksichtigt bleiben.

Dementsprechend zeichnet sich ein erfindungsgemäßes Verfahren zur Fehlererkennung bei einer TOF-Kameravorrichtung dadurch aus, dass eine Fehlererkennung bei dem Pixel oder bei wenigstens einem der Pixel durchgeführt wird, wodurch die bereits im Zusammenhang mit der erfindungsgemäßen TOF-Kameravorrichtung und deren Ausführungsbeispielen genannten Vorteile erzielt werden können. Vor allem kann das Verfahren gemäß der Erfindung ein erhöhtes Maß an Sicherheit bieten, insbesondere, wenn die zugrunde liegende TOF-Kameravorrichtung als Teil eines Fahrassistenzsystems oder zu sonstigen Steuerungs- bzw. Navigationszwecken verwendet wird.

Bei einem derartigen Verfahren kann in vorteilhafter Weise bei einem Ausführungsbeispiel eine Verzögerungsleitung entsprechend dazu verwendet werden, Distanzwerte zu variieren und zu kontrollieren, ob diese den zu erwartenden Distanzwerten entsprechen. Ferner ist eine Weiterbildung denkbar, die ein Fill-and-Spillverfahren verwendet, indem durch Anlegen einer Steuerspannung an einem oder mehreren Pixeln eine Ladungsträgermenge induziert wird, die der Detektion eines Objekts in einer bestimmten Entfernung entspricht. Auf diese Weise kann überprüft werden, ob das Pixel fehlerhaft arbeitet und Objekte nicht erkennt oder ob tatsächlich kein Objekt im Sichtfeld auftaucht. Zudem kann beim Ausführungsbeispiel über eine Adressierung und Rücklesung einzelner Pixel überprüft werden, ob tatsächlich alle Pixel ausgelesen werden und die Zuordnung der ausgelesenen Ausgänge und der adressierten Pixel korrekt ist.

### Ausführungsbeispiele

Ausführungsbeispiele der Erfindung werden in den Zeichnungen dargestellt und nachstehend unter Angabe weiterer Einzelheiten und Vorteile näher erläutert. Im Einzelnen zeigen:
- Figur 1:: eine schematische Darstellung einer TOF-Kameravorrichtung gemäß der Erfindung mit Verzögerungsleitung,
- Figur 2:: eine schematische Darstellung einer TOF-Kameravorrichtung gemäß der Erfindung mit Adressier- und Rückleseeinrichtung,
- Figur 3:: eine schematische Darstellung des Fill-and-Spill-Verfahrens für eine TOF-Kameravorrichtung gemäß der Erfindung, sowie
- Figur 4:: eine schematische Darstellung einer digitalen Verzögerungsleitung für eine TOF-Kameravorrichtung gemäß der Erfindung.

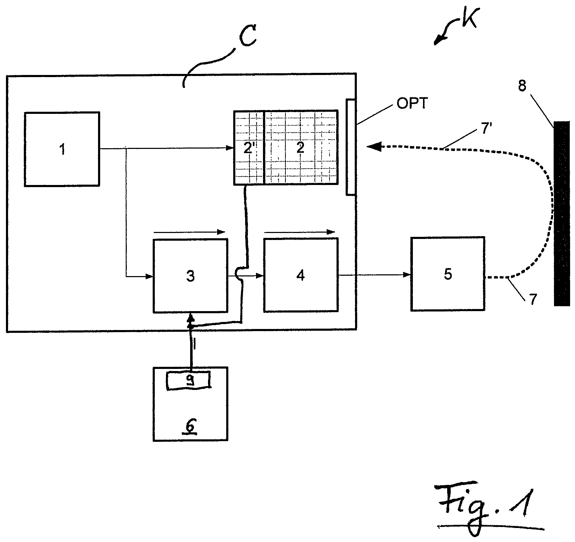

Figur 1 zeigt eine TOF-Kameravorrichtung K gemäß der Erfindung mit einer Modulationseinrichtung 1, die ein Modulationssignal erzeugt. Dieses Modulationssignal wird zunächst auf direktem Weg an eine Auswerteeinrichtung 2' geleitet, die unmittelbar in Verbindung mit einem Empfänger 2 in Form eines Pixelfeldes steht. Das Modulationssignal wird darüber hinaus an eine Verzögerungsleitung 3 weitergeleitet, die das Signal gegebenenfalls zeitverzögert durchschleust und es an einen Beleuchtungstreiber 4 abgibt. Der Beleuchtungstreiber 4 wiederum gibt sein Signal an eine Beleuchtungseinheit 5 ab, die zum Beispiel als Laser oder als Leuchtdiode ausgebildet sein kann. Die Verzögerungsleitung 3 wird von einer Kontrollvorrichtung 6 als übergeordnetes Überwachungssystem über die Schnittstelle I kontrolliert. Genauer gesagt umfasst die Kontrollvorrichtung 6 im Speziellen noch eine Testvorrichtung 9, welche die Verzögerungsleitung 3 kontrolliert, die auch über die Schnittstelle I mit der Auswerteeinrichtung 2' verbunden ist, um den schließlich bestimmten Distanzwert zu kontrollieren. Das ausgesandte Licht 7 gelangt auf ein Objekt 8, wird gestreut und gelangt auf dem Weg 7' wiederum in die Kamera bzw. die Pixelmatrix 2 und wird dort detektiert.

Im Strahlengang ist dem Empfänger 2 eine Empfangsoptik OPT vorgeschaltet. Verzögerungsleitung 3 und Kontrollvorrichtung 6 können grundsätzlich auch zusammen in einer Baueinheit bzw. einem Modul gemeinsam implementiert sein.

Die Ausführungsform gem. Fig. 1 bietet den Vorteil, dass die Kontrollvorrichtung 6 zur Fehlererkennung bei Bedarf über die Schnittstelle I angedockt werden kann und nicht ohne Weiteres dauerhaft in der Baueinheit integriert sein muss. Im vorliegenden Fall sind Modulationseinrichtung 1, Empfänger 2, Auswerteeinrichtung 2', Verzögerungsleitung 3, Beleuchtungstreiber 4 mit Optik OPT auf einem Chip C integriert. Die Verzögerungsleitung 3 kann durchaus in dieser Baueinheit, hier sogar auf dem Chip C implementiert sein, sodass das Modulationssignal nicht z.B. über die Schnittstelle aus der Baueinheit hinaus geleitet werden muss. Im Übrigen kann die Verzögerungsleitung auch zur Kalibrierung verwendet werden, um eine Kalibrierung der von der TOF-Kameravorrichtung ermittelten und ausgegebenen Distanzwerte durchzuführen.

Die Kameravorrichtung K umfasst zumindest die Modulationseinrichtung 1, den Beleuchtungstreiber 4 sowie die Beleuchtung 5, den Empfänger in Form eines Pixelfeldes 2 und die Auswerteeinrichtung 2'.

Die Kontrollvorrichtung 6 kann von der Schnittstelle I abgedockt werden. Die TOF-Kameravorrichtung K kann anschließend im Überwachungsbetrieb eingesetzt werden. Wenn eine Kalibrierung notwendig ist, kann eine Kalibriervorrichtung über die Schnittstelle I angekoppelt werden, um die Verzögerungsleitung 3 zu kontrollieren und die Zeitverzögerung einzustellen, mit der das Modulationssignals verzögert ist, um den Ergebnis-Distanzwert einzustellen.

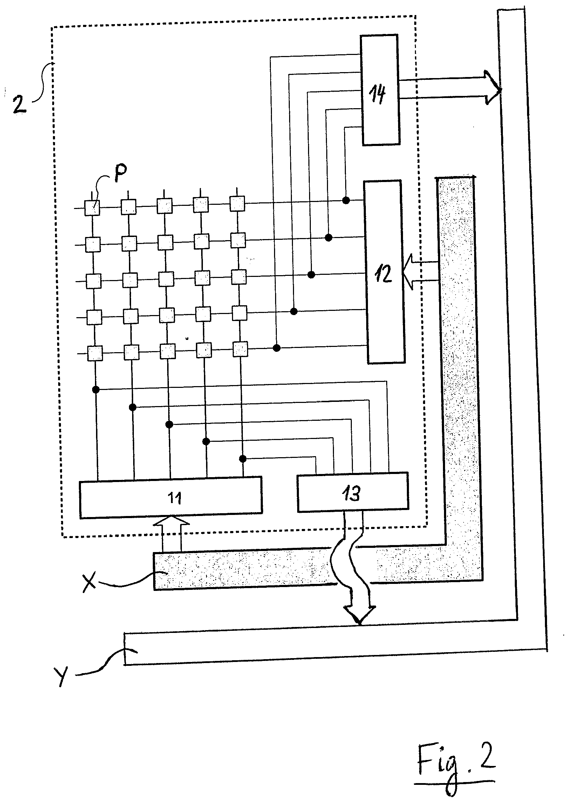

In Figur 2 ist schematisch dargestellt, wie eine Adressierung und Rücklesekontrolle zum Testen der Adressierung in die TOF-Kameravorrichtung K implementiert werden kann. Die Pixel P der Pixelmatrix 2 können jeweils über einen Spaltenadressierer 11 und einen Zeilenadressierer 12 angesteuert werden. Die Adressierung wird über die Kontrollvorrichtung 6 über den Adressierbus x veranlasst. Ferner ist an jeden der Pixel P jeweils eine Rückleseeinrichtung 13, 14 zum Auslesen der Zeilen- und Spalten angeschlossen. Beide Rückleseeinrichtungen 13, 14 sind wiederum mit dem Rücklesebus y und daher auch mit der Kontrollvorrichtung 6 verbunden, sodass ausgelesenen Werte dort abgeglichen werden können. Die Baueinheit der Pixelmatrix 2 kann auf dem Chip C als Teil der TOF-Kameravorrichtung K implementiert werden.

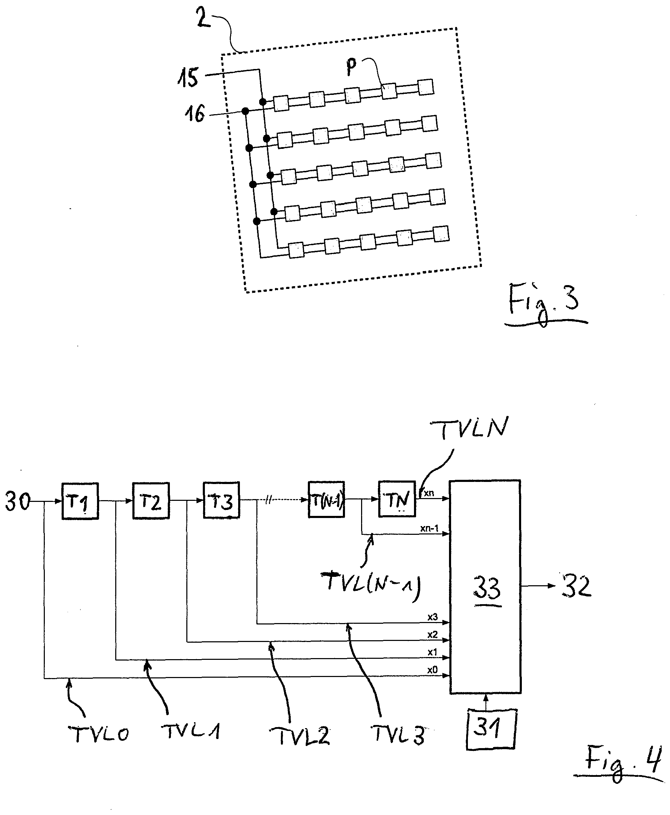

Das Pixelfeld 2 in Figur 3 zeigt eine Matrix-Anordnung einzelner Pixel P, die zeilenweise an Steuerspannungsleitungen 15, 16 angeschlossen sind, um eine Stimulationsspannung an die Pixel anzulegen, um ein Objekt zu simulieren.

Figur 4 wiederum beschreibt eine Ausgestaltung einer Verzögerungsleitung VL mit verschiedenen Verzögerungsstufen T1, T2, T3, ... TN, welche in Serie geschaltet sind. Das Modulationssignal wird über den Eingang 30 eingegeben. Es kann grundsätzlich alle in Serie geschalteten Verzögerungsstufen T1, T2, ..., TN durchlaufen. Vor den Verzögerungsstufen und hinter jeder Verzögerungsstufe ist ein Abzweigungsknoten, der es ermöglicht, das Modulationssignal an der entsprechenden Stelle abzugreifen. Auf diese Weise werden die entsprechenden Teilverzögerungsleitungen TVL0, TVL1, TVL2,...TVLN gebildet. Je mehr Verzögerungsstufen T1, T2,... TN das Signal durchlaufen hat, desto stärker ist es zeitverzögert. Alle Abzweigungen gelangen schließlich in eine Auswahleinheit 31, die zum Beispiel als Multiplexer ausgebildet ist. Der Ausgang 32 des Multiplexers 33 liefert sodann das in der Regel verzögerte Modulationssignal. Die einzelnen Verzögerungsstufen T1, T2,... TN können als digitale Puffer ausgebildet sein, wobei das Eingangssignal 30 bereits in digitaler Form vorliegt. Bei der Abzweigungsleitung TVL0 wird das Signal nur bzw. allenfalls noch durch den Multiplexer 33 verzögert, während die Leitung TVLN bedeutet, dass alle Verzögerungsstufen ausgeschöpft werden und das Signal maximal verzögert wird.

Allen Ausführungsbeispielen und Weiterbildungen der Erfindung ist gemeinsam, dass bei einer TOF-Kameravorrichtung eine verbesserte Fehlererkennung durchgeführt werden kann, indem eine Kontrollvorrichtung für wenigstens ein oder mehrere bzw. sämtliche Pixel vorgesehen ist. Hierdurch wird insbesondere ermöglicht, Fehler zu erkennen sowie Detektionsfehler und korrektes Arbeiten von Pixeln bei gleicher Symptomatik unterscheiden zu können, wobei auch Fehlerarten erkennbar und unterscheidbar gemacht werden können, etwa wenn festgestellt werden soll, ob:
- ein Pixel "hängt",
- die Ausgangswerte bei Pixeln "springen",
- eine Einstellung des Sichtbereichs gegen Unendlich vorliegt, bzw.
- Pixel falsch adressiert sind.

### Bezugszeichenliste:

1 Modulationseinrichtung
2 Pixelmatrix
2' Auswerteeinrichtung
3 Verzögerungsleitung
4 Beleuchtungstreiber
5 Beleuchtung
6 Kontrollvorrichtung
7 Ausgangsstrahl
7' rückgestreutes Licht
8 Objekt
9 Testvorrichtung
11 Spaltenadressierer
12 Zeilenadressierer
13 Spalten-Rückleseeinrichtung
14 Zeilen-Rückleseeinrichtung
15 Steuerspannungsleitung
16 Steuerspannungsleitung
30 Eingang
31 Auswahleinheit
32 Ausgang
33 Multiplexer
C Chip
K TOF-Kameravorrichtung
OPT Empfangsoptik
P Pixel
I Schnittstelle
T1, T2,...TN Verzögerungsstufen
TVL0, TVL1, TVL2,...TVLN Teilverzögerungsleitungen
x Adressierbus
y Rücklesebus

## Patentansprüche

1. TOF-Kameravorrichtung (K) zur Aussendung von Lichtsignalen und Aufnahme des an einem Objekt (8) rückgestreuten Lichts (7') sowie zur Bestimmung der Entfernung der TOF-Kameravorrichtung (K) vom Objekt (8), wobei die TOF-Kameravorrichtung (K) umfasst:
• einen Sender (5) zur Aussendung von Lichtsignalen,
• einen Empfänger (2) zur Detektion des am Objekt (8) rückgestreuten Lichts (7'), der als Pixelmatrix mit wenigstens einem Pixel (P) ausgebildet ist,
• eine Modulationseinrichtung (1) zur Erzeugung eines Modulationssignals, wobei die Modulationseinrichtung (1) mit dem Sender (5) verbunden ist, um vom Sender (5) auszusendende Lichtsignale zu modulieren,
• eine Auswerteeinrichtung (2') zur Auswertung des vom Empfänger (2) detektieren Lichts, welche mit der Modulationseinrichtung (1) verbunden ist, um das Modulationssignal zur Auswertung und Bestimmung der Entfernung zu erhalten,
• **dadurch gekennzeichnet, dass** eine Kontrollvorrichtung (6) zur Fehlererkennung bei wenigstens einem, insbesondere jedem der Pixel (P) vorgesehen ist.

2. TOF-Kameravorrichtung (K) nach einem der vorgenannten Ansprüche, **dadurch gekennzeichnet, dass** die Kontrollvorrichtung (6) eine Testvorrichtung (9) zum Testen der TOF-Kameravorrichtung (K) aufweist,
• wobei eine durch die Testvorrichtung (9) kontrollierbare Verzögerungsleitung (3) vorhanden ist, und
• wobei die Verzögerungsleitung (3) zwischen die Modulationseinrichtung (1), insbesondere den Ausgang der Modulationseinrichtung, an dem das Modulationssignal (1) bereitgestellt werden kann, einerseits und den Sender (5), insbesondere den Eingang des Senders (5) zum Empfang des Modulationssignals, und/oder die Auswerteeinrichtung (2'), insbesondere den Eingang der Auswerteeinrichtung (2') zum Empfang des Modulationssignals, andererseits geschaltet ist, und
• wobei die Testvorrichtung (9) dazu ausgebildet ist, das Modulationssignal zeitverzögert an den Sender (5) und/oder an die Auswerteeinrichtung (2') weiterzuleiten.

3. TOF-Kameravorrichtung (K) nach einem der vorgenannten Ansprüche, **dadurch gekennzeichnet, dass** die Kontrollvorrichtung (6) dazu ausgebildet ist, durch die Testvorrichtung (9) eine Distanzsimulation und/oder eine Distanzvariation für wenigstens eines, insbesondere jedes der Pixel (P) durchzuführen, um zu kontrollieren, welcher Distanzwert durch das entsprechende Pixel (P) bestimmt wird.

4. TOF-Kameravorrichtung (K) nach einem der vorgenannten Ansprüche, **dadurch gekennzeichnet, dass** eine Adressiervorrichtung (11, 12) zur Adressierung der Pixel (P) der Pixelmatrix (2) vorgesehen ist und die Kontrollvorrichtung (6) eine Rückleseeinrichtung (13, 14) umfasst, um die Pixel (P) auszulesen und deren ausgelesenen Inhalt zu kontrollieren.

5. TOF-Kameravorrichtung (K) nach einem der vorgenannten Ansprüche, **dadurch gekennzeichnet, dass** die Kontrollvorrichtung (6) dazu ausgebildet ist, die Adressiervorrichtung (11, 12) anzusteuern, um wenigstens eines der Pixel (P) zu adressieren.

6. TOF-Kameravorrichtung (K) nach einem der vorgenannten Ansprüche, **dadurch gekennzeichnet, dass** die Kontrollvorrichtung (6) eine Vorrichtung (15, 16) zum Anlegen einer Steuerspannung an wenigstens eines, insbesondere jedes der Pixel (P) umfasst, um eine bestimmte Ladungsinjektion durch Anlegen der Steuerspannung als Stimulationsspannung anstelle von durch empfangenes Licht photoinduzierten Ladungsträgern vorzunehmen, sowie zum Auslesen des wenigstens einen Pixels (P) und zur Kontrolle von dessen ausgelesenem Inhalt aufweist, wobei die Vorrichtung zum Anlegen und/oder Auslesen der Steuerspannung mit der Pixelmatrix (2) verbunden ist, um ein zu detektierendes Objekt in einer bestimmten Distanz zu simulieren und/oder die durch die Ladungsinjektion vorgegebene Entfernung zu diesem simulierten Objekt (8) zu überprüfen.

7. TOF-Kameravorrichtung (K) nach einem der vorgenannten Ansprüche, **dadurch gekennzeichnet, dass** die Kontrollvorrichtung (6) dazu ausgebildet ist, die Entfernung des durch Anlegen einer Steuerspannung simulierten Objekts (8) in einer bestimmten Distanz durch Kontrolle der Verzögerungsleitung (3) zu variieren und zu überprüfen, welcher Distanzwert durch das entsprechende Pixel (P) bestimmt wird.

8. TOF-Kameravorrichtung (K) nach einem der vorgenannten Ansprüche, **dadurch gekennzeichnet, dass** die Verzögerungsleitung (3) wenigstens zwei in Serie geschaltete Teilverzögerungsleitungen (TVL1, TVL2,... TVLN) aufweist und eine Auswahleinheit (13) vorgesehen ist, welche das Modulationssignal (1) am Ausgang jeder der Teilverzögerungsleitungen (TVL1, TVL2,... TVLN) abgreift, sodass die mit der Auswahleinheit (2') verbundene Testvorrichtung (6) zwischen verschieden zeitverzögerten Modulationssignalen (1) auswählen kann.

9. TOF-Kameravorrichtung (K) nach einem der vorgenannten Ansprüche, **dadurch gekennzeichnet, dass** die Teilverzögerungsleitungen (TVL0, TVL1, TVL2,... TVLN) jeweils als digitale Puffer (T1, T2,...TN) ausgebildet sind und/oder dass die Verzögerungsleitung wenigstens einen digitalen Zähler, insbesondere mit einer Taktfrequenz von wenigstens zwei Gigahertz aufweist.

10. TOF-Kameravorrichtung (K) nach einem der vorgenannten Ansprüche, **dadurch gekennzeichnet, dass** die Verzögerungsleitung (3) eine analoge Verzögerungseinrichtung aufweist und/oder dass die Testvorrichtung (9) zur analogen oder digitalen Kontrolle der Verzögerungsleitung (3) ausgebildet ist.

11. TOF-Kameravorrichtung (K) nach einem der vorgenannten Ansprüche, **dadurch gekennzeichnet, dass** die Kontrollvorrichtung (6) dazu ausgebildet ist:
• eine Unterbrechung der Bereitschaft wenigstens eines der Pixel zu erkennen, indem die Kontrollvorrichtung (6) durch die Testvorrichtung (9) eine Distanzsimulation und/oder Distanzvariation für jedes der Pixel durchzuführt, um zu kontrollieren, welcher Distanzwert durch das entsprechende Pixel bestimmt wird, und/oder
• ein Distanzauflösungsproblem wenigstens eines der Pixel zu erkennen, indem die Kontrollvorrichtung (6) durch die Testvorrichtung eine Distanzsimulation für jedes der Pixel durchzuführt, um zu kontrollieren, welcher Distanzwert durch das entsprechende Pixel bestimmt wird, und/oder
• das Fehlen eines zu detektierenden Objekts (8) zu erkennen, indem die Kontrollvorrichtung (6) durch die Testvorrichtung (9) eine Distanzsimulation durch Anlegen einer Spannung an wenigstens einem, insbesondere jedem der Pixel (P) durchzuführt, um zu kontrollieren, welcher Distanzwert durch das entsprechende Pixel bestimmt wird, und/oder
• einen Adressierungsfehler wenigstens eines der Pixel zu erkennen, indem die Kontrollvorrichtung (6) durch die Testvorrichtung (9) eine Distanzsimulation für jedes der Pixel (P) durchzuführt, um zu kontrollieren, welcher Distanzwert durch das entsprechende Pixel (P) bestimmt wird.

12. Verfahren zur Fehlererkennung bei wenigstens einem Pixel einer Pixelmatrix (2) mit wenigstens zwei Pixeln (P), wobei das Verfahren bei einer TOF-Kameravorrichtung (K) zur Aussendung von Lichtsignalen und Aufnahme des an einem Objekt rückgestreuten Lichts sowie zur Bestimmung der Entfernung der TOF-Kameravorrichtung (K) vom Objekt (8) verwendet wird, welche umfasst:
• einen Sender (5) zur Aussendung von Lichtsignalen,
• die Pixelmatrix (2) als Empfänger zur Detektion des am Objekt (8) rückgestreuten Lichts,
• eine Modulationseinrichtung (1) zur Erzeugung eines Modulationssignals, wobei die Modulationseinrichtung (1) mit dem Sender (5) verbunden ist, um vom Sender auszusendende Lichtsignale zu modulieren,
• eine Auswerteeinrichtung (2') zur Auswertung des vom Empfänger (2) detektieren Lichts, welche mit der Modulationseinrichtung (1) verbunden ist, um das Modulationssignal zur Auswertung und Bestimmung der Entfernung zu erhalten,
• **dadurch gekennzeichnet, dass** eine Fehlererkennung bei wenigstens einem der Pixel (P) durchgeführt wird.

13. Verfahren nach einem der vorgenannten Ansprüche, **dadurch gekennzeichnet, dass** zur Fehlererkennung eine Distanzsimulation und/oder Distanzvariation für jedes der Pixel (P) durchgeführt wird, um zu kontrollieren, welcher Distanzwert durch das entsprechende Pixel bestimmt wird, indem das Modulationssignal (1) zeitverzögert an den Sender (5) und/oder an die Auswerteeinrichtung (2') weitergeleitet und kontrolliert wird, welcher Distanzwert durch das entsprechende Pixel (P) bestimmt wird.

14. Verfahren nach einem der vorgenannten Ansprüche, **dadurch gekennzeichnet, dass** zur Fehlererkennung wenigstens eines der Pixel (P) adressiert und rückgelesen und somit überprüft wird, ob das und/oder die tatsächlich adressierten Pixel (P) ausgelesen worden sind.

15. Verfahren nach einem der vorgenannten Ansprüche, **dadurch gekennzeichnet, dass** zur Fehlererkennung eine bestimmte Ladungsinjektion durch Anlegen einer Stimulationsspannung an wenigstens einem, insbesondere jedem der Pixel (P) anstelle von durch empfangenes Licht photoinduzierten Ladungsträgern vorgenommen und anschließend das und/oder die entsprechenden Pixel ausgelesen wird/werden, um ein zu detektierendes Objekt (8) zu simulieren und/oder die durch die Ladungsinjektion vorgegebene Distanzwert zu diesem simulierten Objekt zu überprüfen, wobei vorzugsweise der durch Anlegen der Stimulationsspannung simulierte Distanzwert durch eine Zeitverzögerung des Modulationssignals variiert und überprüft wird.
